# EUROPÄISCHE PATENTANMELDUNG

(11) **EP 1 006 624 A2**
(43) Veröffentlichungstag der Anmeldung: **07.06.2000**
(21) Anmeldenummer: 99123798.3
(22) Anmeldetag: 01.12.1999
(51) Int. Cl.: H01R 24/16, H01R 13/66, B60D 1/64

(54) **Steckdose für elektrische Steckverbindungen**

(30) Priorität: 01.12.1998 DE 29821387 U; 30.07.1999 DE 29913257 U
(71) Anmelder: ERICH JAEGER GmbH & Co. KG, D-61350 Bad Homburg v.d.H. 1 (DE)
(72) Erfinder: Wiese, Wolfgang, 61273 Wehrheim (DE); Ruebsam, Carsten, 36088 Hünfeld (DE)
(74) Vertreter: KEIL & SCHAAFHAUSEN

(57) **Zusammenfassung**

Die Erfindung betrifft eine Steckdose für mehrpolige elektrische Steckverbindung zwischen Zug- und Anhängerfahrzeug, mit einem Dosengehäuse (1) und einem in diesem aufgenommenen Kontaktträgereinsatz (2) für die Aufnahme von mit elektrischen Anschlussleitungen (3, 3') zu versehenden elektrischen Steckkontakten (4), welcher ggf. einen Kontaktträger (5) für die rückwärtige Abstützung der Steckkontakte (4) in dem Kontaktträgereinsatz (2) und einen Kontaktaufsatz (6) für die Halterung der Steckkontakte (4) an dem Kontaktträger (5) aufweist, sowie ggf. mit einem Stützkörper (7) für die Abstützung des Kontaktträgereinsatzes (2) auf einer rückwärtigen Montagefläche (8). Zur Funktionssignalübertragung zwischen Zug- und Anhängerfahrzeug, wie bspw. für die Überwachung und/oder die Fehlererkennung bzw. die Fehleranzeige der Anhängerfunktionen bzw. als Netzknoten für BUS-Systeme, ist in dem Dosengehäuse (1) ein Elektronikmodul (9) integriert.

## Beschreibung

Die Erfindung bezieht sich auf eine Steckdose für mehrpolige elektrische Steckverbindung zwischen Zug- und Anhängerfahrzeug, mit einem Dosengehäuse und einem in diesem aufgenommenen Kontaktträgereinsatz für die Aufnahme von mit elektrischen Anschlussleitungen zu versehenden elektrischen Steckkontakten, welcher ggf. einen Kontaktträger für die rückwärtige Abstützung der Steckkontakte in dem Kontatträgereinsatz und einen Kontaktaufsatz für die Halterung der Steckkontakte an dem Kontaktträger aufweist, sowie ggf. mit einem Stützkörper für die Abstützung des Kontaktträgereinsatzes auf einer rückwärtigen Montagefläche.

Eine derartige Steckdose ist bspw. aus der DE 78 12 822 U1 bekannt. Dabei ist der Kontaktträger selbst zur Bildung des Stützkörpers mit rückwärtigen Beinen ausgestattet, welche beim Ein- oder Anbau des Dosengehäuses an der Ein- oder Anbaufläche zur Anlage kommen. Die bekannte Steckdose ist verhältnismäßig hoch, so dass sie nicht allen Einbausituationen gerecht wird. Ferner kann sie die vielfältigen Anforderungen an die Funktionssignalübertragung, welche heute von einer Steckdose für die mehrpolige elektrische Steckverbindung zwischen einem Zugfahrzeug und einem Anhängerfahrzeug gefordert werden, nicht erfüllen. Die bekannte Steckdose erfordert vielmehr die Anordnung eines gesonderten elektronischen Anhängermoduls in dem Zugfahrzeug oder dem Anhängerfahrzeug bspw. für die Überwachung der Anhängerblinkeinrichtung, die Steuerung eines Spannungsreduziergerätes und dgl. mehr. Dadurch treten Platzprobleme sowie die Gefahr der Beeinträchtigung durch Feuchtigkeit auf. Außerdem ist für die Schaltung eines derartigen Elektronikmoduls bisher eine umfangreiche Verkabelung erforderlich, welche die Montage aufwendig und die Anlage störanfällig macht.

Aufgabe der vorliegenden Erfindung ist es, insbesondere unter Vermeidung der Nachteile des Standes der Technik eine Steckdose der eingangs genannten Art vorzuschlagen, welche den heutigen Anforderungen an die funktionsgerechte vielfältige Signalübertragung von Zugfahrzeug auf Anhängerfahrzeug gerecht wird.

Diese Aufgabe wird erfindungsgemäß im wesentlichen dadurch gelöst, dass in dem Dosengehäuse ein Elektronikmodul zur Funktionssignalübertragung zwischen Zug- und Anhängerfahrzeug, wie bspw. für die Überwachung und/oder die Fehlererkennung bzw. die Fehleranzeige der Anhängerfunktionen bzw. als Netzknoten für BUS-Systeme, integriert ist.

Nach der Erfindung besteht kein zusätzlicher Platzbedarf für das Elektronikmodul außerhalb der Steckdose. Das Elektronikmodul liegt ferner geschützt in dem ohnehin vorhandenen Dosengehäuse. Eine zusätzliche Verkabelung ist auf ein Minimum reduziert, nämlich diejenigen Wege, welche innerhalb der Steckdose überbrückt werden müssen. Dementsprechend gering ist auch der Montageaufwand, weil es lediglich erforderlich ist, die erfindungsgemäße selbst leicht zusammenfügbare Steckdose an geeigneter Stelle des Fahrzeugs anzubringen.

In Weiterbildung des Erfindungsgedankens hat das Elektronikmodul vorzugsweise die Form einer die einzelnen Elektronikkomponenten tragenden Leiterplatte oder Elektronikplatine, welche in dem Dosengehäuse positionierbar ist.

Dabei wird zur weiteren Verringerung des Montageaufwandes die Elektronikplatine bzw. Leiterplatte vorzugsweise in das Dosengehäuse eingerastet, eingeklemmt und/oder von einem Stützkörper, vorzugsweise dem Stützkörper für den Kontaktträgereinsatz, gehalten. Bei dieser Ausführung werden zur Positionierung also nur diejenigen Teile verwendet, welche auch in einer herkömmlichen Steckdose vorhanden sind. Die Leiterplatte findet so auf einfache Weise zwischen dem Kontaktträgereinsatz und dem ggf. vorgesehenen Stützkörper ihren Platz. Sie lässt sich bei Defekt demzufolge auch leicht austauschen.

Im Rahmen der Vormontage kann der Kontaktträgereinsatz über die ggf. eingepressten und verlöteten Steckkontakte mit der Leiterplatte verbunden sein, so dass beide Komponenten als Baueinheit in das Dosengehäuse eingesetzt werden können.

Die Leiterplatte ist in ihrer äußeren Grundgestalt z.B. an die Innenkontur des Dosengehäuses angepasst.

Zur Abdichtung kann ferner der Kontaktträgereinsatz über eine z.B. plattenförmige Flachdichtung an der Leiterplatte anliegen.

Gemäß einem weiteren Erfindungsmerkmal ist vorgesehen, dass die Steckkontakte des Kontaktträgereinsatzes mit Anschlussstiften durch die Leiterplatte und ggf. die Flachdichtung hindurchragen.

Auf die Anschlussstifte ist dann in einfacher Weise ein Steckhülsengehäuse mit den Anschlussleitungen aufsteckbar.

Rückwärtig kann das Dosengehäuse von einer z.B. aus gummielastischem Material bestehenden Abdeck- oder Abdichtplatte verschlossen sein, so dass ein Feuchtigkeitszutritt auch von dieser Seite aus versperrt ist.

Dabei bildet die Abdeckplatte vorzugsweise den Stützkörper für den Kontaktträgereinsatz und übernimmt damit eine Doppelfunktion.

In der Abdeckplatte kann eine Vertiefung für die Aufnahme des Steckhülsengehäuses vorgesehen sein, so dass der Anschluss der Steckdose auf einfache Weise auch noch erfolgen kann, wenn die Steckdose vollständig zusammengesetzt ist.

Eine stabile bauliche Einheit erhält man insbesondere dann, wenn der Boden der Vertiefung an der Leiterplatte anliegt und die Anschlussstifte der Steckkontakte in die Vertiefung hineinragen.

Die Elektronikplatine ist in ihrer Grundgestalt kreisringförmig (entsprechend der Gestalt des Gehäusemantels), ggf. mit Randaussparungen für die Aufnahme weiterer Steckdosenkomponenten. Innerhalb des kreisringförmigen Platinenkörpers kann der Kontaktträgereinsatz aufgenommen werden.

Insbesondere kann die Elektronikplatine in ihrem Innenumfangsrand z.B. mit Hilfe des Stützkörpers, vorzugsweise mittels Abdichtungsring, abgedichtet sein, um ein Vordringen von Feuchtigkeit zu der Elektronikplatine von der Einsteckseite des Dosengehäuses her zu vermeiden.

Bei einer weiteren vorteilhaften Ausgestaltung der Erfindung weisen der Kontaktträgereinsatz und der Gehäusemantel sowie der ggf. vorhandene Stützkörper zueinander fluchtende Aussparungen für die seitliche Wegführung der Anschlussleitungen auf. Auf diese Weise kann eine im Vergleich zu herkömmlichen Steckdosen verhältnismäßig flache Steckdose geschaffen werden, obgleich in dem Dosengehäuse das zusätzliche Bauteil Elektronikmodul aufgenommen ist.

Es wird ferner vorgeschlagen, Mittel zum Signalisieren der Einsteckposition eines Steckers in dem Dosengehäuse, d.h. z.B. für die Anhängerkennung, vorzusehen, mit einem in wenigstens einer Anschlussleitung wenigstens eines Steckkontaktes des Kontaktträgereinsatzes zu einer Ausgangssignal-Empfangseinrichtung vorgesehenen, einen Schaltkontakt aufweisenden, in einem Freiraum des Dosengehäuses befindlichen Schalteinsatz und wenigstens einem Zusatzstecker. Derartige Mittel sind aus der DE 92 07 525 Ul an sich bekannt, gestatten jedoch auch bei der vorliegenden neuartigen Steckdose vorgesehen zu werden.

Der Kontaktträgereinsatz ist vorteilhafterweise in dem Stützkörper mittels an letzterem vorgesehener Rasthaken einrastbar, was eine schnelle und zuverlässige Montage gestattet. Stützkörper und Kontaktträgereinsatz können so separat aber auch gemeinsam montiert und demontiert werden.

Um die Halterung des Kontaktträgereinsatzes in dem Stützkörper zuverlässig zu sichern, können die Rasthaken bei montiertem, also bei sich auf eine Montagefläche abstützenden Stützkörper, gegen elastisches Ausweichen zur Verhinderung der Freigabe des Kontaktträgereinsatzes blockiert sein.

Die Blockage der Rasthaken kann dabei mittels Sicherheitsvorsprüngen erfolgen, welche bei der Montage bezüglich der Rasthaken reversibel von einer Freigabestellung in eine Blockierstellung überführbar sind, und zwar durch Abstützen des Stützkörpers auf der Montagefläche.

Die Abdichtplatte kann zur weiteren Sicherung gegen das Eindringen von Feuchtigkeit und aus Gründen der Erleichterung der Montage einstückig mit der seitlich oder axial weisenden Tülle für das Anschlusskabel ausgebildet sein.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschrieben und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: teilweise vertikal geschnitten eine die Erfindung aufweisende Steckdose gemäß einer Ausführungsform,
- Fig. 2: die Steckdose gemäß Fig. 1 in Seitenansicht, bei seitlich abgewinkeltem Anschlusskabel,
- Fig. 3: in Draufsicht eine erfindungsgemäße Steckdose gemäß einer weiteren Ausführungsform der Erfindung, bei welcher das Anschlusskabel nicht tangential (wie bei Fig. 2) sondern radial von dem Dosengehäuse weggeführt ist,
- Fig. 4a und 4b: in bestückungsseitiger und lötseitiger Ansicht ein erfindungsgemäß als Elektronikplatine ausgebildetes Elektronikmodul für die integrierte Aufnahme in dem Dosengehäuse,
- Fig. 5a bis 5l: jeweils in Unteransicht und in (teilweise geschnittener) Seitenansicht die einzelnen Bauteile der eine erfindungsgemäße Steckdose ausmachenden Bauteile in fortschreitender Montage,
- Fig. 6: im Teilschnitt eine die Erfindung aufweisende Steckdose gemäß einer weiteren Ausführungsform der Erfindung,
- Fig. 7a bis 7c: in rückwärtiger Ansicht, im Längsschnitt und in Vorderansicht einen erfindungsgemäß eingesetzten Kontaktträgereinsatz gemäß einer noch weiteren Ausführungsform der Erfindung,
- Fig. 8a bis 8c: die erfindungsgemäße Baueinheit aus Leiterplatte und Kontaktträgereinsatz gemäß Fig. 7a bis 7c in rückwärtiger Ansicht, im Längsschnitt und in Vorderansicht,
- Fig. 9a bis 9b: die erfindungsgemäße Steckdose nach dem Einrasten der Baueinheit aus Leiterplatte und Kontaktträgereinsatz gemäß den Fig. 8a bis 8c in rückwärtiger Ansicht und im Längsschnitt,
- Fig. 10a und 10b: die erfindungsgemäße Steckdose gemäß den Fig. 9a und 9b in rückwärtiger Ansicht und im Längsschnitt nach dem Einsetzen der rückwärtigen Abdeckplatte,
- Fig. 11a und 11b: in Vorderansicht und Seitenansicht (teilweise geschnitten) ein erfindungsgemäß eingesetztes Steckhülsengehäuse, und
- Fig. 12: im Längsschnitt die erfindungsgemäße Steckdose gemäß den Fig. 9a und 9b kurz vor dem Einstecken des Steckhülsengehäuses in die hintere Vertiefung der Abdeckplatte.

Wie aus den zeichnerischen Darstellungen ersichtlich, weist die für eine mehrpolige, in dargestelltem Falle 13-polige Steckverbindung für den elektrischen Anschluss eines Kraftfahrzeuganhängers an ein Kraftfahrzeug bestimmte Steckdose ein Dosengehäuse 1 auf, in welchem ein Kontaktträgereinsatz 2 für die Aufnahme von mit elektrischen Anschlussleitungen 3, 3' zu versehenden elektrischen Steckkontakten 4 untergebracht ist. Der Kontaktträgereinsatz 2 besteht aus einem Kontaktträger 5 für die rückwärtige Abstützung der Steckkontakte 4 in dem Kontaktträgereinsatz 2 und einem Kontaktaufsatz 6 für die Halterung der Steckkontakte 4 an dem Kontaktträger 5. Kontaktträger 5 und Kontaktaufsatz 6 sind unter Einschluss der Steckkontakte 4 aufeinandergesteckt und ggf. lösbar miteinander verrastet, so dass defekte Steckkontakte 4 leicht ausgetauscht werden können.

Der Kontaktträgereinsatz 2 stützt sich auf einen Stützkörper 7 ab, welcher rückwärtig mit dem Dosengehäuse 1 fluchtet. Der Stützkörper 7 liegt dabei rückwärtig auf einer Abdichtplatte 14 auf, welche das Dosengehäuse 1 rückwärtig abdichtet. Die Abdichtplatte 14 umgreift dabei das Dosengehäuse 1 mit einem äußeren Randwulst und liegt ihrerseits auf der z.B. von einer Trägerplatte gebildeten Montagefläche 8 an, an welcher die Steckdose mittels Schrauben 25 befestigt werden kann.

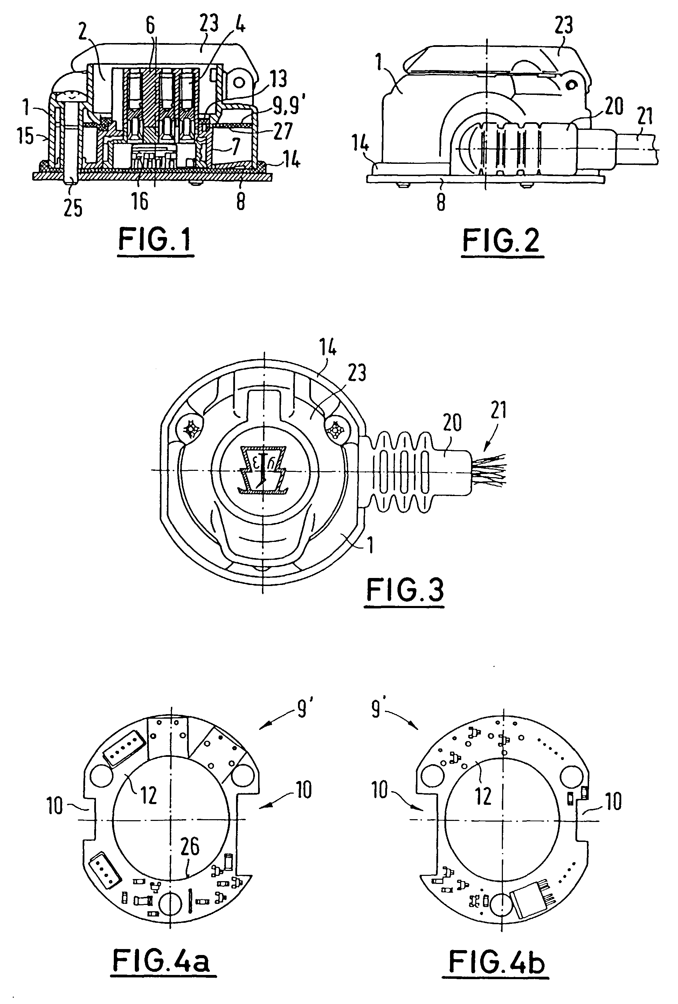

Aus Fig. 1 ist insbesondere auch zu erkennen, dass innerhalb des Dosengehäuses 1 ein Elektronikmodul 9 integriert ist, welches als kreisringförmige Elektronikplatine 9' ausgebildet ist. Diese kann aufgrund ihrer inneren Aussparung 26 (vgl. Fig. 4a und 4b) auf einen entsprechenden inneren Ringvorsprung 27 des Dosengehäuses 1 aufgesteckt oder bspw. von dem Stützkörper 7 klemmend gehalten werden. Wichtig in diesem Zusammenhang ist, dass die Elektronikplatine 9' an ihrem Innenumfangsrand 12 mittels eines Abdichtringes 13 gegen Eindringen von Feuchtigkeit aus der Einstecköffnung des Dosengehäuses 1 gesichert ist, ebenso wie die bereits erwähnte Abdichtungsplatte 14 ein Eindringen von Feuchtigkeit von hinten in das Dosengehäuse 1 zuverlässig verhindert. Aus den Fig. 4a und 4b ist auch ersichtlich, dass die Elektronikplatine 9' verschiedene Randaussparungen 10 hat, welche die Anordnung weiterer Steckdosenbauteile im Inneren des Dosengehäuses 1 gestattet. In ihrer Grundgestalt ist die Elektronikplatine 9' jedoch in Anpassung an die Form des Gehäusemantels 15 kreisringförmig.

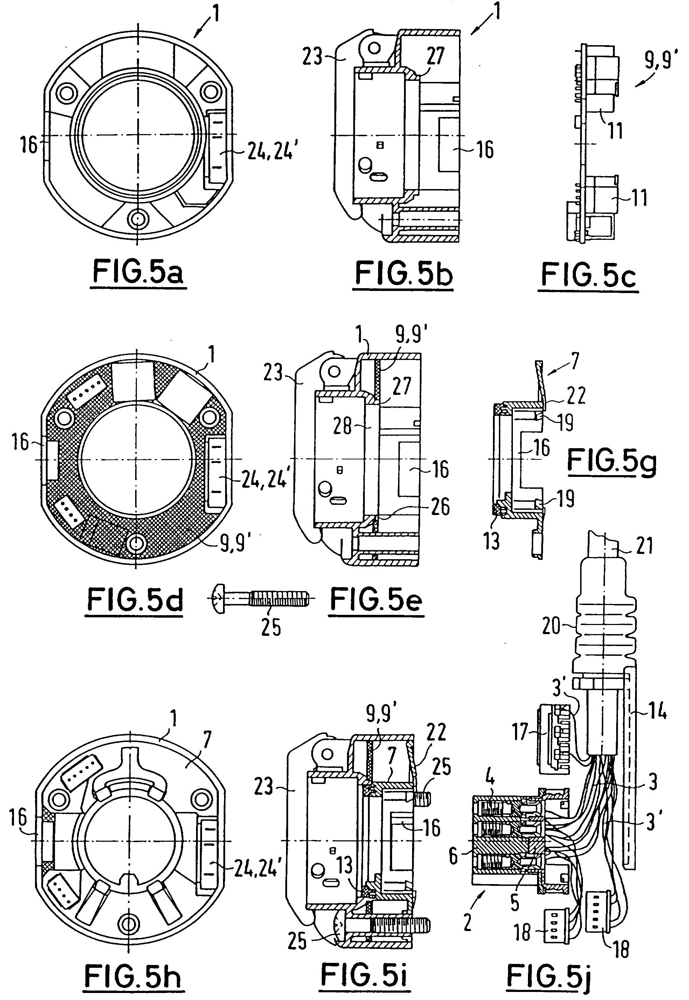

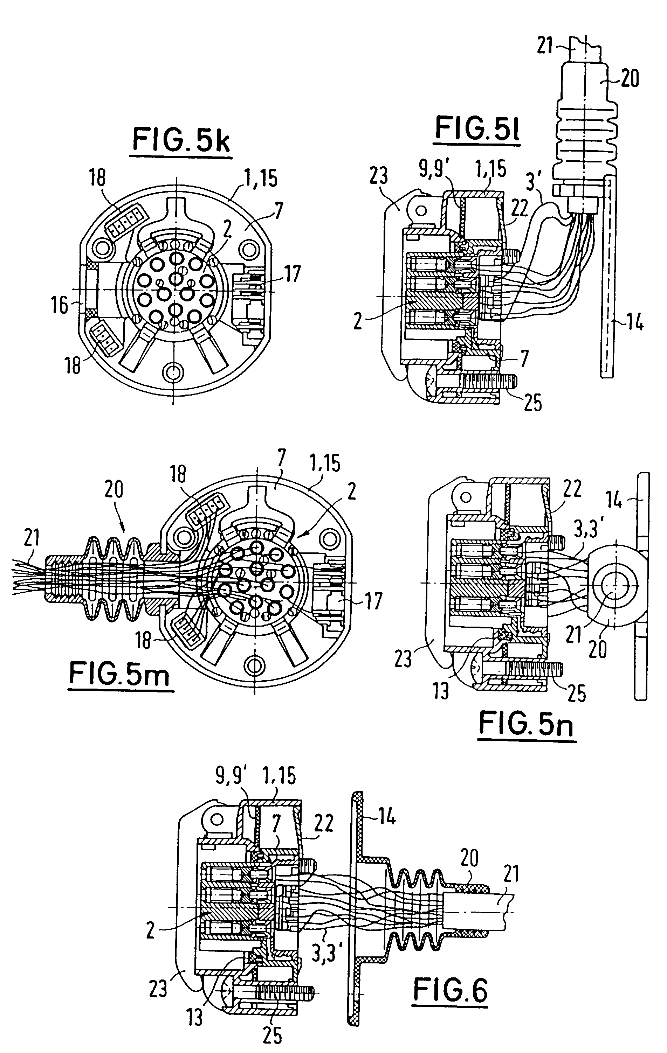

Um eine Steckdose möglichst geringer Bauhöhe zu schaffen, haben der Kontaktträgereinsatz 2, der Gehäusemantel 15 und der Stützkörper 7, wie aus den Fig. 1, 5a, 5b, 5d bis 5i ersichtlich, zueinander fluchtende Aussparungen 16. Diese erlauben die seitliche Wegführung der Anschlussleitungen 3, 3'. Wie aus Fig. 5c erkennbar, sind auch die Elektronikkomponenten 11 auf der Elektronikplatine 9' so angeordnet, dass die seitliche Wegführung der Anschlussleitungen 3, 3' nicht beeinträchtigt wird.

Die erfundene Steckdose besitzt ferner Mittel zum Signalisieren der Einsteckposition eines Steckers, z.B. zum Zwecke der Anhängerkennung oder zum Abschalten des zugfahrzeugseitigen Nebelschlusslichts bei gestecktem Stecker in dem Dosengehäuse 1, d.h. für die Anhängerkennung. Weitere Sensorfunktionen sind denkbar. Diese Signalisiermittel weisen wenigstens in einer Anschlussleitung 3' wenigstens eines Steckkontaktes 4 des Kontaktträgereinsatzes 2 zu einer (nicht dargestellten) Ausgangssignal-Empfangseinrichtung einen einen Schaltkontakt aufweisenden Schalteinsatz 17 auf. In diesem Fall haben der Kontaktträgereinsatz 2 und der ggf. vorgesehene Stützkörper 7 zueinander fluchtende Aussparungen für die seitliche Wegführung der Anschlussleitungen 3' von dem als Zusatzstecker ausgebildeten Schalteinsatz 24, 24'. Der Schalteinsatz 24, 24' ist mit seitlich abstehenden bzw. seitlich abgewinkelten Kontakten für die Anschlussleitungen 3' ausgestattet, um an Bauhöhe einzusparen. Weitere Zusatzstecker 18 dienen einerseits dem Anschluss der Bordelektronik, andererseits der Funktionssignalübermittlung an das Anhängerfahrzeug.

Zur einfachen Montage ist der Kontaktträgereinsatz 2 in den Stützkörper 7 mittels an letzterem vorgesehenen Rasthaken 19 einrastbar. Die Rasthaken 19 sind bei montiertem Dosengehäuse 1, d.h. in dem Fall, dass sich der Stützkörper 7 auf der Montagefläche 8 abstützt, gegen elastisches Ausweichen zur Verhinderung der Freigabe des Kontaktträgereinsatzes 2 blockiert. Die Blockage der Rasthaken 19 erfolgt mittels an dem Stützkörper 7 vorgesehenen Sicherheitsvorsprüngen 22, welche vor der Montage über die rückwärtige Stirnfläche des Dosengehäuses 1 hinausragen, welche aber bei der Montage bezüglich der Rasthaken 19 reversibel von einer Freigabestellung in eine Blockierstellung überführbar sind, und zwar mittels Abstützens des Stützkörpers 7 auf der Montagefläche 8.

Verfolgt man die Fig. 5a bis 5n, so sieht man die aufeinanderfolgenden Schritte der Montage der einzelnen Bauteile einer die Erfindung aufweisenden Steckdose, beginnend mit dem Einfügen der Elektronikplatine 9' (Fig. 5c) in das Dosengehäuse 1 und Aufklemmen auf den Ringvorsprung 27 aufgrund der konzentrischen Aussparung 26. Mit ihrem Außenumfang ist die Elektronikplatine 9', wie aus Fig. 5d und 5e am besten ersichtlich, in das Dosengehäuse 1 eingepasst. Der Stützkörper 7 (Fig. 5g) trägt auf seiner Stirnseite den Abdichtring 13, welcher sich in die den Ringvorsprung 27 begrenzende Öffnung 28 des Dosengehäuses 1 einlegt und eine Abdichtung gegen Eindringen von Feuchtigkeit gewährleistet. An dem Stützkörper 7 sind, wie aus Fig. 5g am besten erkennbar, auch die Sicherungsvorsprünge 22 angeformt, welche das Nach-Außen-Schwenken der Rasthaken 19 bei montierter Steckdose verhindern, damit letztere den Kontaktträger 5 sicher in dem Dosengehäuse 1 halten, auch wenn auf diesen beim Einstecken eines Steckers erhebliche axiale Kräfte ausgeübt werden. Wie aus Fig. 5j ersichtlich, werden Kontaktträgereinsatz 2, Zusatzstecker 17 für Schalteinsatz 24' (Steckhülsengehäuse mit Mikroschalter) und weitere Zusatzstecker 18 (von der Bordelektronik und zu dem Anhänger) erst in das Dosengehäuse 1 eingefügt, nachdem sie an die Anschlussleitung 3, 3' angeschlossen sind. Fig. 5j lässt auch erkennen, dass die Tülle 20 für das Anschlusskabel 21 einstückig mit der rückwärtigen Abdichtungsplatte 14 ausgebildet sein kann.

Fig. 6 veranschaulicht eine andere Ausgestaltung einer die Erfindung aufweisenden Steckdose. Hierbei sind die Anschlussleitungen 3, 3' und damit auch das Anschlusskabel 21 zentrisch axial von dem Dosengehäuse 2 weggeführt. Aber auch hier ist die Anschlusstülle 20 einstückig mit der Abdichtungsplatte 14 ausgebildet.

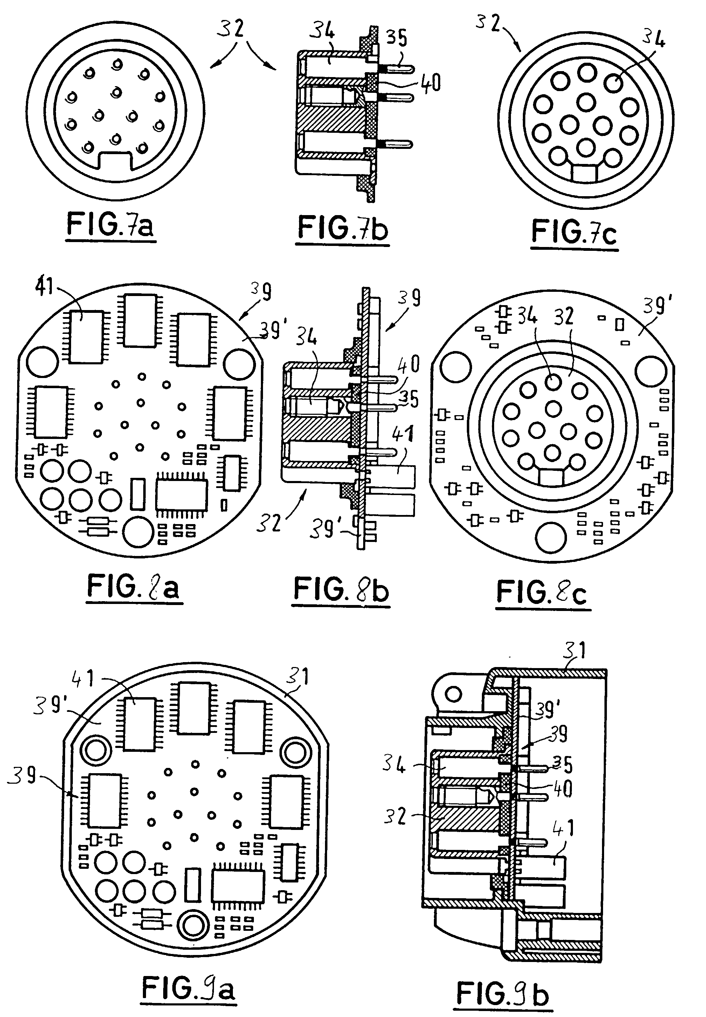

Ein Kontaktträgereinsatz 32 gemäß Fig. 7a bis 7c besteht aus einem Gehäuse, in welchem die von vorne zugänglichen Steckkontakte 34 einer Steckdose für mehrpolige elektrische Steckverbindung untergebracht sind. Die Steckkontakte 34 weisen rückwärtig aus dem Gehäuse herausragende Anschlussstifte 35 auf. Rückwärtig ist das Gehäuse mittels einer Flachdichtung 40, durch welche die Anschlussstifte 35 hindurchragen, gegen Eindringen von Feuchtigkeit und dgl. abgeschlossen.

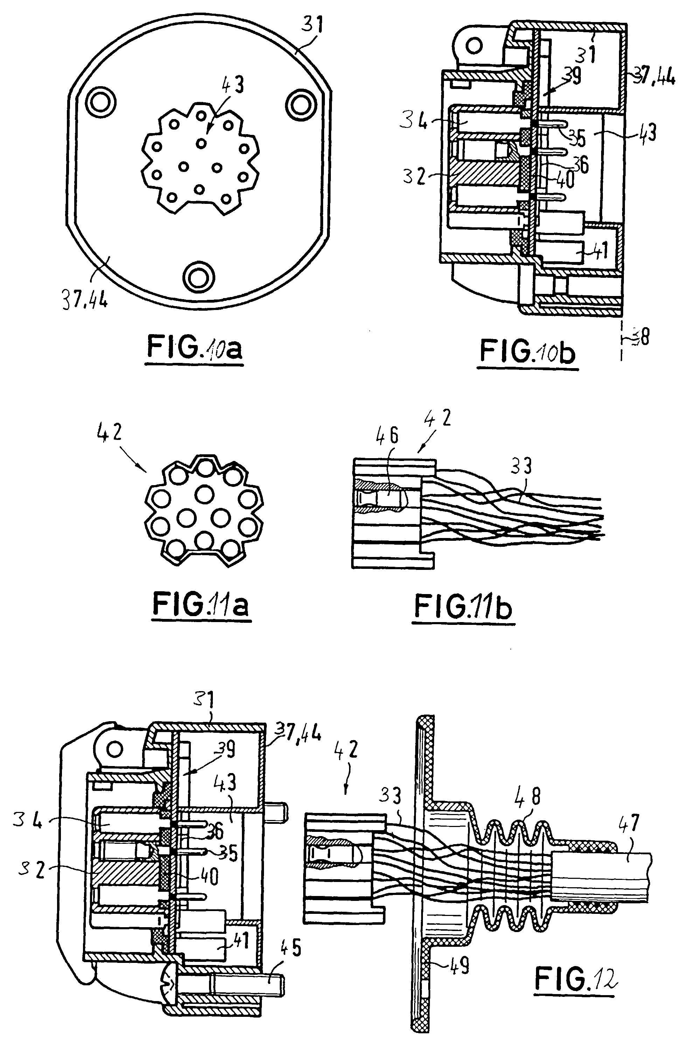

Gemäß den Fig. 8a bis 8c ist der Kontaktträgereinsatz 32 mit einem eine Leiterplatte 39' aufweisenden Elektronikmodul 39 derart zu einer Einheit zusammengesetzt, dass die Anschlussstifte 35 durch die Leiterplatte 39' hindurchragen. Auf der Leiterplatte 39' können verschiedene Elektronikkomponenten 41 untergebracht sein, welche der Funktionssignalübertragung zwischen Zug- und Anhängerfahrzeug dienen.

Gemäß den Fig. 9a und 9b ist die Baueinheit aus Elektronikmodul 39, 39' und Kontaktträgereinsatz 32 in ein Dosengehäuse 31 einer Steckdose eingerastet.

Gemäß Fig. 10a und 10b ist als nächster Schritt das Dosengehäuse 31 rückwärtig mit einer Abdeckplatte 44 verschlossen. Die Abdeckplatte 44 weist eine zentrische Vertiefung 43 auf, in welche die Anschlussstifte 35 hineinragen. Während die Abdeckplatte 44 in ihrem äußeren Umfangsbereich mit der rückwärtigen Kante des Dosengehäuses 31 fluchtet, liegt der Boden 36 der Vertiefung 43 an der Leiterplatte 39' an. Auf diese Weise bildet die Abdeckplatte 44 einen Stützkörper 37 für die Einheit aus Elektronikmodul 39, 39' und Kontaktträgereinsatz 32, wenn das Dosengehäuse 31 mittels unverlierbar an dem Dosengehäuse 31 gehaltenen Schrauben 45 (vgl. Fig. 12) an einer Montagefläche 38 befestigt ist.

In die Vertiefung 43 und damit auf die Anschlussstifte 35 kann ein Steckhülsengehäuse 42 gemäß Fig. lla und llb aufgesteckt werden, mit deren zu den Anschlussstiften 35 passenden Steckhülsen 46 die Anschlussleitungen 33 verbunden sind.

Gemäß Fig. 12 sind die Anschlussleitungen 33 zu einem Anschlusskabel 47 zusammengefasst. Das Anschlusskabel 47 weist eine Tülle 48 aus gummielastischem Material auf, an welche sich steckdosenseitig einstückig eine Abdichtplatte 49 anschließt, welche auf das rückwärtige Ende des Dosengehäuses 31 zur zusätzlichen Abdichtung aufgesetzt werden kann. Im montierten Zustand befindet sich die Abdichtplatte 49 aus gummielastischem Material zwischen Dosengehäuse 31 und Montagefläche 48.

Damit wird eine kompakte Steckdose vorgeschlagen, in welcher leicht montierbar und demontierbar ein Elektronikmodul integriert ist, welches den heutigen Anforderungen an die Funktionssignalübertragung zwischen Zug- und Anhängerfahrzeug gerecht wird.

### Bezugszeichenliste:

- 1: Dosengehäuse
- 2: Kontaktträgereinsatz
- 3, 3': Anschlussleitungen
- 4: Steckkontakte
- 5: Kontaktträger
- 6: Kontaktaufsatz
- 7: Stützkörper
- 8: Montagefläche
- 9, 9': Elektronikmodul, Elektronikplatine
- 10: Randaussparungen
- 11: Elektronikkomponente
- 12: Innenumfangsrand
- 13: Abdichtungsring
- 14: Abdichtungsplatte
- 15: Gehäusemantel
- 16: Aussparungen
- 17: Zusatzstecker für Schalteinsatz
- 18: Zusatzstecker
- 19: Rasthaken
- 20: Tülle
- 21: Anschlusskabel
- 22: Sicherungsvorsprünge
- 23: Deckel
- 24, 24': Freiraum, Schalteinsatz
- 25: Schraube
- 26: Aussparung
- 27: Ringvorsprung
- 28: Öffnung

- 31: Dosengehäuse
- 32: Kontakkträgereinsatz
- 33: Anschlussleitungen
- 34: Steckkontakte
- 35: Anschlussstifte
- 36: Boden
- 37: Stützkörper
- 38: Montagefläche
- 39, 39': Elektronikmodul, Leiterplatte
- 40: Flachdichtung
- 41: Elektronikkomponenten
- 42: Steckhühlsengehäuse
- 43: Vertiefung
- 44: Abdeckplatte
- 45: Schrauben
- 46: Steckhülsen
- 47: Anschlusskabel
- 48: Tülle
- 49: Abdichtplatte

## Patentansprüche

1. Steckdose für mehrpolige elektrische Steckverbindung zwischen Zug- und Anhängerfahrzeug, mit einem Dosengehäuse (1, 31) und einem in diesem aufgenommenen Kontaktträgereinsatz (2, 32) für die Aufnahme von mit elektrischen Anschlussleitungen (3, 3', 33) zu versehenden elektrischen Steckkontakten (4, 34), welcher ggf. einen Kontaktträger (5) für die rückwärtige Abstützung der Steckkontakte (4) in dem Kontaktträgereinsatz (2) und einen Kontaktaufsatz (6) für die Halterung der Steckkontakte (4) an dem Kontaktträger (5) aufweist, sowie ggf. mit einem Stützkörper (7, 37) für die Abstützung des Kontaktträgereinsatzes (2, 32) auf einer rückwärtigen Montagefläche (8, 38), **dadurch gekennzeichnet**, dass in dem Dosengehäuse (1, 31) ein Elektronikmodul (9, 39) zur Funktionssignalübertragung zwischen Zug- und Anhängerfahrzeug, wie bspw. für die Überwachung und/oder die Fehlererkennung bzw. die Fehleranzeige der Anhängerfunktionen bzw. als Netzknoten für BUS-Systeme, integriert ist.

2. Steckdose nach Anspruch 1, **dadurch gekennzeichnet**, dass das Elektronikmodul (9, 39) die Form einer die einzelnen Elektronikkomponenten (11, 41) tragenden Elektronikplatine (9') bzw. Leiterplatte (39') hat, welche in dem Dosengehäuse (1, 31) positionierbar ist.

3. Steckdose nach Anspruch 2, **dadurch gekennzeichnet**, dass die Elektronikplatine (9') bzw. Leiterplatte (39') in das Dosengehäuse (1, 31) eingerastet, eingeklemmt und/oder von einem Stützkörper, vorzugsweise dem Stützkörper (7, 37) für den Kontaktträgereinsatz (2, 32), gehalten ist.

4. Steckdose nach einem der Ansprüche 1 bis 3, **dadurch gekennzeichnet**, dass der Kontaktträgereinsatz (32) über die ggf. eingepressten und verlöteten Steckkontakte (34) mit der Leiterplatte (39') verbunden ist.

5. Steckdose nach einem der Ansprüche 2 bis 4, **dadurch gekennzeichnet**, dass die Elektronikplatine/Leiterplatte (9', 39') in ihrer äußeren Grundgestalt an die Innenkontur des Dosengehäuses (1, 31) angepasst ist.

6. Steckdose nach einem der vorhergehenden Ansprüche, **dadurch gekennzeichnet**, dass der Kontaktträgereinsatz (32) über eine z.B. plattenförmige Flachdichtung (40) an der Leiterplatte (39') anliegt.

7. Steckdose nach einem der vorhergehenden Ansprüche, **dadurch gekennzeichnet**, dass die Steckkontakte (4, 34) mit Anschlussstiften (35) durch die Elektronikplatine/Leiterplatte (9', 39') und ggf. die Flachdichtung (40) hindurchragen.

8. Steckdose nach Anspruch 7, **dadurch gekennzeichnet**, dass auf die Anschlussstifte (35) ein Steckhülsengehäuse (42) mit den Anschlussleitungen (33) aufsteckbar ist.

9. Steckdose nach einem der vorhergehenden Ansprüche, **dadurch gekennzeichnet**, dass das Dosengehäuse (1, 31) rückwärtig von einer Abdeck- oder Abdichtplatte (14, 44, 49) verschlossen ist.

10. Steckdose nach Anspruch 9, **dadurch gekennzeichnet**, dass die Abdeckplatte (44) den Stützkörper (37) für den Kontaktträgereinsatz (32) bildet.

11. Steckdose nach Anspruch 9 oder 10, **dadurch gekennzeichnet**, dass die Abdeckplatte (44) eine Vertiefung (43) für die Aufnahme des Steckhülsengehäuses (42) aufweist.

12. Steckdose nach Anspruch 11, **dadurch gekennzeichnet**, dass der Boden (36) der Vertiefung (43) an der Leiterplatte (39') anliegt und die Anschlussstifte (35) der Steckkontakte (34) in die Vertiefung (43) hineinragen.

13. Steckdose nach einem der Ansprüche 2 bis 12, **dadurch gekennzeichnet**, dass die Elektronikplatine (9') in ihrer Grundgestalt kreisringförmig, ggf. mit Randaussparungen (10) für die Aufnahme weiterer Steckdosenkomponenten (17, 18), ausgebildet ist.

14. Steckdose nach einem der Ansprüche 2 bis 13, **dadurch gekennzeichnet**, dass die Elektronikplatine (9') an ihrem Innenumfangsrand (12) ggf. unter Mithilfe des Stützkörpers (7) und vorzugsweise mittels Abdichtungsring (13) abgedichtet ist.

15. Steckdose nach einem der vorhergehenden Ansprüche, **dadurch gekennzeichnet**, dass der Kontaktträgereinsatz (2) und der Gehäusemantel (15) sowie der ggf. vorhandene Stützkörper (7) zueinander fluchtende Aussparungen (16) für die seitliche Wegführung der Anschlussleitungen (3, 3') aufweisen.

16. Steckdose nach einem der vorhergehenden Ansprüche, **gekennzeichnet durch** Mittel zum Signalisieren der Einsteckposition eines Steckers in dem Dosengehäuse, d.h. z.B. für die Anhängerkennung, mit einem in wenigstens einer Anschlussleitung (3') wenigstens eines Steckkontaktes (4) des Kontaktträgereinsatzes (2) zu einer Ausgangssignal-Empfangseinrichtung vorgesehenen, einen Schaltkontakt aufweisenden, in einem Freiraum (24) des Dosengehäuses (1) befindlichen Schalteinsatz (24') und wenigstens einem Zusatzstecker (17, 18).

17. Steckdose nach einem der vorhergehenden Ansprüche, **dadurch gekennzeichnet**, dass der Kontaktträgereinsatz (2) in dem Stützkörper (7) mittels an letzterem vorgesehenen Rasthaken (19) einrastbar ist.

18. Steckdose nach Anspruch 17, **dadurch gekennzeichnet**, dass die Rasthaken (19) bei montiertem Dosengehäuse (1) gegen elastisches Ausweichen zur Verhinderung der Freigabe des Kontaktträgereinsatzes (2) und damit des Elektronikmoduls (9) blockiert sind.

19. Steckdose nach Anspruch 18, **dadurch gekennzeichnet**, dass die Blockage der Rasthaken (19) mittels Sicherheitsvorsprüngen (22) erfolgt, welche bei der Montage bezüglich der Rasthaken (19) reversibel von einer Freigabestellung in eine Blockierstellung überführbar sind, und zwar aufgrund Abstützens des Stützkörpers (7) auf der Montagefläche (8).

20. Steckdose nach einem der Ansprüche 9 bis 19, **dadurch gekennzeichnet**, dass die Abdichtplatte (14, 49) einstückig mit der seitlich oder axial weisenden Tülle (20, 48) für das Anschlusskabel (21, 47) ausgebildet ist.
